Europäisches Patentamt

European Patent Office

Office européen des brevets

(19)

(11) Veröffentlichungsnummer: **0 244 578**

**B1**

(12) EUROPÄISCHE PATENTSCHRIFT

(45) Veröffentlichungstag der Patentschrift: **08.08.90**

(51) Int. Cl.⁵: **F 16 K 31/04, F 16 K 31/50**

(21) Anmeldenummer: **87102537.5**

(22) Anmeldetag: **23.02.87**

(54) **Elektromotorisch angetriebene Schwenkvorrichtung.**

(30) Priorität: **06.05.86 DE 3615368**

(43) Veröffentlichungstag der Anmeldung:
**11.11.87 Patentblatt 87/46**

(45) Bekanntmachung des Hinweises auf die
Patenterteilung:
**08.08.90 Patentblatt 90/32**

(84) Benannte Vertragsstaaten:
**CH FR GB IT LI**

(56) Entgegenhaltungen:
GB-A- 966 039
US-A-2 704 947
US-A-3 063 298
US-A-3 575 378
US-A-3 774 462
US-A-3 877 677

(73) Patentinhaber: **Müller, Fritz**
**Neuer Wasen 6**
**D-7118 Ingelfingen-Criesbach (DE)**

(72) Erfinder: **Müller, Fritz**
**Neuer Wasen 6**
**D-7118 Ingelfingen-Criesbach (DE)**

(74) Vertreter: **Leyh, Hans, Dr.-Ing. et al**
**Patentanwälte Berendt, Leyh & Hering Innere**
**Wiener Strasse 20**
**D-8000 München 80 (DE)**

Courier Press, Leamington Spa, England.

**Beschreibung**

Die Erfindung betrifft eine elektromotorisch angetriebene Schwenkvorrichtung, insbesondere zum Öffnen und Schließen einer Absperrklappe für eine Rohrleitung mit einem Elektromotor, durch den z.B. über ein Getriebe eine Gewindespindel betätigbar ist, auf der eine Gewindemutter hin- und herbewegbar ist, die über eine Schwinge mit einer Schaltwelle für die Absperrklappe gekoppelt ist, wobei in den beiden Endlagen der Schwinge der Abstand zwischen dem Ablenkpunkt der Schwinge an der Gewindemutter und der Drehachse der Schaltwelle aus größten ist.

Bei der Schwenkvorrichtung nach dem US—A—3 575 378 ist die Gewindemutter, die auf der Gewindespindel hin und her läuft, über einen Stift und ein Langloch mit der Schwinge verbunden. Nachteilig bei dieser Konstruktion ist es, daß wegen der Veränderung des Hebelarmes in der Mittelstellung der Mutter die Schwinge mit dem Langloch weit über die Mutter und die Spindel hinaus auf die andere Seite ragt. Dies führt dazu, daß dort ein entsprechender Platz vorhanden sein muß, denn die Schwinge steht infolge ihrer Kreisbewegung weit über die Gewindespindel über.

Aufgabe der Erfindung ist es, die bisher bekannten Vorrichtungen dieser Art hinsichtlich der Kraftübertragung auf das anzutreibende Element zu verbessern, ferner soll der Platzbedarf und der konstruktive Aufwand verringert werden.

Bei der vorliegende Erfindung ist die Schwinge mittels eines Stiftes an der Gewindemutter angelenkt, derart, daß sich die Schwinge zwar relativ zur Gewindemutter drehen kann, wenn die Gewindemutter längs der Gewindespindel hin und der bewegt wird, die Schwinge führt aber relativ zur Gewindemutter keine translatorische Bewegung aus. Dies hat den Vorteil, daß der Abstand des Stiftes und damit der Abstand des vorderen Endes der Schwinge von der Vorderwand der Vorrichtung stets gleich ist, so daß an der Vorderseite weniger Platzbedarf erförderlich ist. Die ganze Verschiebebewegung der Schwinge wird auf den rückwärtigen Teil der Vorrichtung verlogt, wo wegen des Getriebes ohnehin Platz für die Verschiebebewegung innerhalb des Längloches zur Verfügung steht.

Die erfindungsgemäße Verbindung zwischen Schwinge und Gewindemutter bietet aber einen weiteren Vorteil.

Durch die Kupplung der Schwinge mit der Gewindemutter mit Hilfe des Stiftes wird die Gewindemutter gehalten und gegen Verdrehung gesichert, es ist also keine zusätzliche Führung für die Gewindemutter erforderlich.

Dies hat jedoch bei der Vorrichtung nach der US—A—3 575 378 der Fall, denn dort heißt es, daß die Mutter in einer geradlinigen Bahn geführt wird, die mit der Achse der Gewindespindel fluchtet. Die Mutter ist hierzu mit Hilfe des unteren Teiles des Stiftes verschiebbar in einer Führung geführt, die am Gehäuse angebracht ist.

Vorteilhafterweise ist die Schwinge mit einem Langloch versehen, in welches die Schaltwelle gleitend, aber drehfest mit der Schwinge eingreift. Das Langloch kann mit einem reibungsarmen Kunststoff, z.B. Delrin, ausgekleidet sein.

Vorteilhafterweise können ferner die Endschalter zur Umsteuerung der Schwenkbewegung der Schwinge an einem Schalterträger mittels Länglöchern verstellbar angebracht sein, wodurch der Hub der Schwinge verändert werden kann.

Zur Anzeige der Schwingenstellung kann eine mit der Schwinge gekoppelte Anzeigescheibe vorgesehen sein.

Schließlich ist die Gewindespindel vorzugsweise als Rollspindel und die Gewindemutter als Kugelumlaufmutter ausgeführt, wodurch die Reibungskräfte beträchtlich herabgesetzt wurden können.

Eine beispielsweise Ausführungsform der Erfindung wird nachfolgend anhand der Zeichnung erläutert, in der

Fig. 1 schematisch eine Vorderansicht der Schwenkvorrichtung zeigt.

Fig. 2 zeigt schematisch eine Draufsicht auf die Vorrichtung nach Fig. 1.

Fig. 3 zeigt schematisch eine Seitenansicht auf die Vorrichtung nach Fig. 1 und

Fig. 4 zeigt teilweise im Schnitt die Schaltwelle mit der Schwinge im Detail.

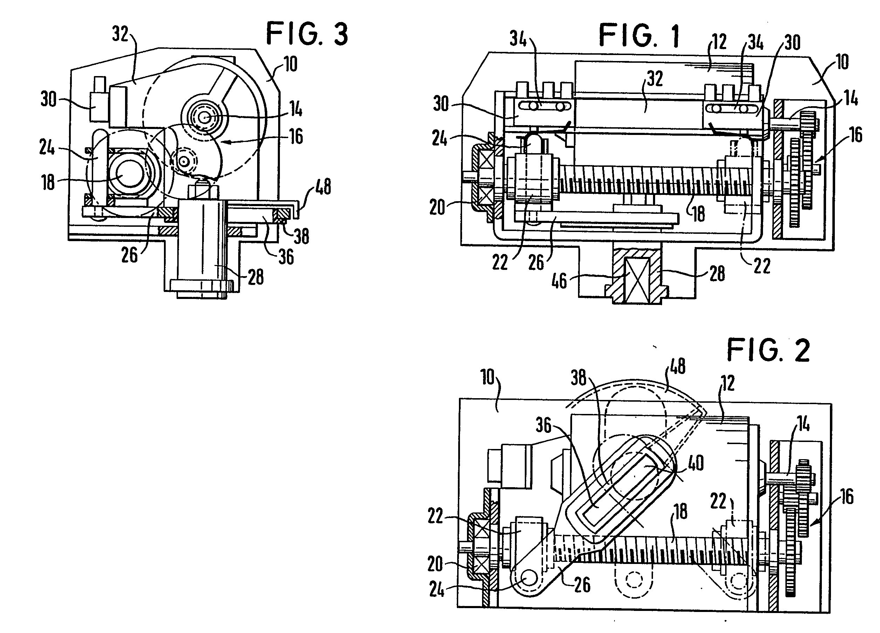

In Fig. 1 ist die Schwenkvorrichtung in Seitenansicht schematisch dargestellt, wobei auf einem Motorblech oder Motorgehäuse 10 ein Elektromotor 12 befestigt ist, der eine Motorwelle 14 hat, welche ein Getriebe 16 antreibt. Das Getriebe 16 kann z.B., wie dargestellt, ein zweistufiges Zahnradgetriebe sein.

Das nicht näher bezeichnete Ausgangsrad des Getriebes 16 ist mit einer Gewindespindel 18 gekoppelt, die in nur schematisch angedeuteten Lagern 20, die im Motorgehäuse angeordnet sind, gelagert ist. Das Motorblech oder Motorgehäuse 10 bildet den Träger für den Motor, das Lager und das Getriebe.

Auf der Gewindespindel 18 sitzt eine Gewindemutter 22, die bei Drehung der Gewindespindel 18 sich längs der letzteren bewegt.

Über einen Zapfen 24 ist die Gewindemutter 22 drehbar mit einer Schwinge 26 gekoppelt, über welche eine Schaltwelle 28 eines hin- und herzuschwenkenden Elements, z.B. eine Absperrklappe für eine Rohrleitung, betätigbar ist.

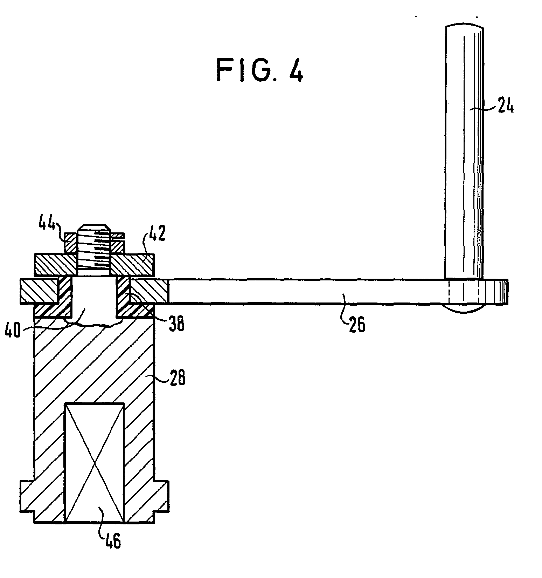

Der Zapfen 24 ist mit der Schwinge 26 fest verbunden, z.B. vernietet, wie Fig. 4 zeigt.

Die Gewindemutter 22 arbeitet mit Endschaltern 30 zusammen, die an einem Schalterträger 32 befestigt, z.B. angeschraubt sind. Die Befestigung der Endschalter 30 am Schalterträger 32 erfolgt zweckmäßigerweise über Langlöcher 34, so daß die Endschalter 30 am Schalterträger 32, welcher parallel zur Gewindespindel 18 verläuft, verstellbar sind, wodurch der Hub der Gewindemutter 22 auf der Gewindespindel 18 und damit der Hub der Schwinge 26 verstellbar ist.

Wie Fig. 2 schematisch zeigt, ist die Schwinge 26 mit einem Langloch 36 versehen, das mit einer Kunststoffschicht 38, z.B. Delrin, ausgekleidet ist.

In das Langloch 36 der Schwinge 26 ragt ein Zweikant 40 hinein, der Teil der Schaltwelle 28 ist. Der Zweikant 40 ist im Langloch 36 verschiebbar geführt, so daß zwischen der Schwinge 26 und der Schaltwelle 28 eine drehfeste Kopplung gebildet wird, wobei sich aber die Schwinge relativ zur Schaltwelle während der Schwenkbewegung verschieben kann. Die Verbindung zwischen Schwinge und Schaltwelle wird vervollständigt durch eine Scheibe 42, die oberhalb des Langloches 36 auf einen Gewindeansatz der Schaltwelle 28 aufgesetzt ist, sowie eine Mutter 44, die auf diesen Gewindeansatz geschraubt ist, wie Fig. 4 zeigt.

Die Schaltwelle 28 hat an ihrer Unterseite, wie ebenfalls Fig. 4 zeigt, ein Vierkantloch 46 zur drehfesten Verbindung mit dem zu betätigenden Element. Wie Fig. 3 zeigt, ist mit der Schwinge 26 eine Anzeigescheibe 48 verbunden, welche die jeweilige Stellung der Schwinge und damit des mit ihr gekoppelten Absperrorgans anzeigt.

Es wird vorgezogen, die Gewindespindel 18 als Rollspindel und die Gewindemutter 22 in Form einer Kugelumlaufmutter auszuführen, um die Reibung zwischen Spindel und Mutter zu reduzieren.

Die erfindungsgemäße Schwenkvorrichtung arbeitet wie folgt. Wenn der Elektromotor 12 eingeschaltet wird, so treibt er über das Getriebe 16 die Gewindespindel 18 an. Sobald diese sich dreht, beginnt die Gewindemutter 22 auf der Gewindespindel 18 sich in deren Achsrichtung zu bewegen, bis sie auf einen der beiden Endschalter 30 trifft, der durch den Zapfen 24 betätigt wird, wodurch der Motor 12 umgeschaltet und damit auch die Drehrichtung der Gewindespindel 18 umgekehrt wird. Die Gewindemutter 22 läuft dann in umgekehrter Richtung längs der Gewindespindel 18, bis sie auf den anderen Endschalter 30 trifft, wodurch dieser betätigt und dadurch der Motor 12 erneut umgeschaltet wird.

Die Gewindemutter 22 bewegt sich somit auf der Gewindespindel 18, gesteuert durch die beiden Endschalter 30 hin und her. Bei dieser Hin- und Herbewegung wird die Schwinge 26, die schwenkbar mit der Gewindemutter 22 verbunden ist, mitgenommen, so daß die Schwinge 26 eine Schwenkbewegung ausführt.

Diese Schwenkbewegung der Schwinge 26 wird über das Langloch 36 und den Zweikant 40 auf die Schaltwelle 28 übertragen, die ebenfalls eine entsprechende Schwenkbewegung ausführt und das mit ihr verbundene, nicht gezeigte Absperrorgan öffnet oder schließt.

Die Schwinge 26 ist derart mit der Schaltwelle 28 und damit mit dem Absperrorgan gekoppelt, daß das letztere seine geschlossene Stellung in der einen Endstellung der Schwinge 26 und seine geöffnete Stellung in der anderen Endstellung der Schwinge 26 einnimmt. Auf diese Weise wird erreicht, daß das von der Schwinge 26 auf das Absperrorgan ausgeübte Drehmoment in der Öffnungsstellung und in der Schließstellung des Absperrorgangs ein Maximum erreicht, da in den beiden Endstellungen der Schwinge 26 der Hebelarm zur Drehung der Schaltwelle 28, d.h. der Abstand zwischen der Mittelachse der Zapfens 24 und der Mittelachse der Schaltwelle 28 am größten ist.

Während der Schwenkbewegung der Schwinge wird dieser Abstand und damit der Hebelarm verändert und er erreicht sein Minimum in der Mittelstellung der Schwinge zwischen den beiden Endstellungen.

Wie Fig. 2 zeigt, wird die Schwinge 26 während ihres Schwenkweges im Bereich der Schaltwelle 28 nach rückwärts über diese hinausgeschoben, weil sich während der Schwenkbewegung der Schwinge 26 der obengenannte Hebel oder Abstand von dem Maximalwert in den beiden Endstellungen der Schwinge 26 auf den Minimalwert in der Mittelstellung der Schwinge ändert.

Trotzdem ist hierzu kein erhöhter Platzbedarf erforderlich, da wegen des Motors und des Getriebes an der Rückseite der Vorrichtung ausreichend Platz für dieses Übergreifen der Schwinge zur Verfügung steht.

An der Vorderseite der Schwinge, d.h. an der Verbindungsstelle der Schwinge 26 und des Zapfens 24 mit der Gewindemutter 22 ist demgegenüber, im Gegensatz zu früheren Schwenkvorrichtungen, kein zusätzlicher Raumbedarf erforderlich, weil die Schwinge an der Gewindemutter drehbar aber im Übrigen fest angelenkt ist.

Durch die Verwendung eines geschlossenen Längloches anstelle einer am hinteren Ende der Schwinge offenen Führung wird ferner eine bessere Verbindung zwischen Schwinge 26 und Schaltwelle 28 als bisher erreicht und insbesondere ein Kippen der letzteren in den Endstellungen verhindert.

Infolge der Verwendung des reibungsarmen Kunststoffbelages 38 und der langen Führung des Zweikantes 40 im Langloch 36 wird eine beträchtliche Verminderung der Reibung erzielt.

Die Gewindemutter 22 wird, wie bereits erwähnt, vorzugsweise als Kugelumlaufmutter ausgeführt, sie kann aber auch aus Kunststoff ausgeführt sein. Die Schwenkvorrichtung ermöglicht es, das zu betätigende Element, z.B. eine Absperrklappe, mindestens über einen Winkel von 90° zu schwenken.

**Patentansprüche**

1. Elektromotorisch angetriebene Schwenkvorrichtung, insbesondere zum Öffnen und Schließen einer Absperrklappe für eine Rohrleitung, mit einem Elektromotor, durch den z.B. über ein Getriebe eine Gewindespindel (18) betätigbar ist, auf der eine Gewindemutter (22) hin- und herbewegbar ist, die über eine Schwinge (26) mit einer Schaltwelle (28) für die Absperrklappe gekoppelt ist, wobei in den beiden Endlagen der Schwinge (26) der Abstand zwischen dem Anlenkpunkt der Schwinge (26) an der Gewindemutter (22) und der Drehachse der Schaltwelle (28) an größten ist, dadurch gekennzeichnet, daß die Schwinge (26) mittels eines Zapfens (24) an der Gewindemutter (22) drehbar, an der Schaltwelle (28) dagegen drehfest aber relativ verschiebbar zu dieser angelenkt ist.

2. Schwenkvorrichtung nach Anspruch 1, dadurch gekennzeichnet, daß die Schwinge (26) ein Langloch (36) aufweist, in welchem die Schaltwelle (28) verschiebbar geführt ist.

3. Schwenkvorrichtung nach Anspruch 2, dadurch gekennzeichnet, daß das Langloch (36) mit einer reibungsarmen Kunststoffschicht (38) ausgekleidet ist.

4. Schwenkvorrichtung nach einem der vorhergehenden Ansprüche, dadurch gekennzeichnet, daß Endschalter (30) zur Umsteuerung der Schwenkbewegung der Schwinge (26) an einem Schalterträger (32) mittels Langlöchern (34) verstellbar befestigt sind.

5. Schwenkvorrichtung nach einem der vorhergehenden Ansprüche, dadurch gekennzeichnet, daß zur Anzeige der Schwingenstellung eine Anzeigescheibe (48) mit der Schwinge (26) gekoppelt ist.

6. Schwenkvorrichtung nach einem der vorhergehenden Ansprüche, dadurch gekennzeichnet, daß die Gewindespindel (18) als Rollspindel und die Gewindemutter (22) als Kugelumlaufmutter ausgeführt sind.

## Revendications

1. Dispositif de pivotement actionné par un moteur électrique, en particulier pour ouvrir et fermer un clapet d'arrêt d'une tuyauterie, possédant un moteur électrique à l'aide duquel peut être actionné, p.ex. à travers une transmission, une broche filetée (18) sur laquelle peut être déplacé un écrou fileté (22) accouplé par une coulisse (26) à un arbre de commande (28) pour le clapet d'arrêt, dans les deux positions finales de la coulisse (26) l'écart étant le plus grand entre le point articulé de la coulisse (26) sur l'écrou fileté (22) et l'axe tournant de l'arbre de commande (28), caractérisé par le fait que la coulisse (26) est articulée de façon tournant à l'aide d'un pivot (24) sur l'écrou fileté (22), par contre sur l'arbre de commande (28) de façon résistant à la rotation, mais relativement déplaçable par rapport à ce dernier.

2. Dispositif de pivotement suivant la revendication 1, caractérisé par le fait que la coulisse (26) possède un trou oblong (36) dans lequel est guidé l'arbre de commande (28) de façon déplaçable.

3. Dispositif de pivotement suivant la revendication 2, caractérisé par le fait que le trou oblong (36) est revêti d'une couche en matière synthétique (38) à basse friction.

4. Dispositif de pivotement suivant l'une des revendications précédentes, caractérisé par le fait que des interrupteurs de fin de course (30) destinés à changer le pivotement de la coulisse (26) sont fixés de façon déplaçable sur un porte-interrupteurs (32) à l'aide de trous oblongs (34).

5. Dispositif de pivotement suivant l'une des revendications mentionnées ci-dessus, caractérisé par le fait qu'un disque (48) est accouplé à la coulisse (26) pour indiquer la position de cette dernière.

6. Dispositif de pivotement suivant l'une des revendications mentionnées ci-dessus, caractérisé par le fait que la broche filetée (18) est conçue comme broche tournante et l'écrou fileté (22) comme écrou à circulation de billes.

## Claims

1. Electromotive actuated slewing device, in particular for opening and closing a throttle valve for a pipeline, with an electric motor, by means of which a threaded spindle (18) can for example be actuated through a gear unit, on which spindle a threaded nut (22) can be moved to and fro, which is coupled through a rocker arm (26) with a control shaft (28) for the throttle valve, whereby the distance between the pivotal point of the rocker arm (26) to the threaded nut (22) and the axis of rotation of the control shaft (28) is greatest in the two end positions of the rocker arm (26), thereby characterized that the rocker arm (26) can rotate on the threaded nut (22) by means of a pin (24), but is pivoted rotationally rigid to the control shaft (28) but is relatively slidable to it.

2. Slewing device according to Claim 1, thereby characterized that the rocker arm (26) has a slotted hole (36) in which the control shaft (28) is slidably guided.

3. Slewing device according to claim 2, thereby characterized that the slotted hole (36) is lined with a low-friction plastic layer (38).

4. Slewing device according to one of the preceding claims, thereby characterized that limit switches (30) for reversing the slewing movement of the rocker arm (26) are adjustably fastened to a switch carrier (342) by means of slotted holes (34).

5. Slewing device according to one of the preceding claims thereby characterized that an indicator dial (48) is coupled with the rocker arm (26) for displaying the rocker arm position.

6. Slewing device according to one of the preceding claims, thereby characterized that the threaded spindle (18) is constructed as roller spindle and the threaded nut (22) as circulating ball bearing nut.

FIG. 3

FIG. 1

FIG. 2

EP 0 244 578 B1

# FIG. 4